# EUROPEAN PATENT APPLICATION

(11) **EP 2 933 226 A1**
(43) Date of publication of application: **21.10.2015**
(21) Application number: 13865205.2
(22) Date of filing: 16.12.2013
(51) Int. Cl.: C01B 3/38

(54) **HYDROGEN GENERATION DEVICE**

(30) Priority: 17.12.2012 JP 2012274287
(71) Applicant: Panasonic Intellectual Property Management Co., Ltd., Osaka-shi, Osaka 540-6207 (JP)
(72) Inventor: FUJIOKA, Hiroki, Osaka-shi Osaka 540-6207 (JP); MAENISHI, Akira, Osaka-shi Osaka 540-6207 (JP); FUKUDA, Masaru, Osaka-shi Osaka 540-6207 (JP)
(74) Representative: Grünecker Patent- und Rechtsanwälte PartG mbB
(86) International application number: PCT/JP2013/007375
(87) International publication number: WO 2014/097601

(57) **Abstract**

A hydrogen generator (1) includes: a reformer (6) configured to generate a fuel gas, containing hydrogen as a major component, from a raw material gas; a combustor configured to heat the reformer; a hydro-desulfurizer (3) configured to be heated by the reformer to remove a sulfur compound contained in the raw material gas by a hydrodesulfurization reaction; and a cooler (19) configured to cool down the hydro-desulfurizer. The reformer includes a low temperature portion and a high temperature portion higher in temperature than the low temperature portion. The cooler is provided at a position corresponding to the high temperature portion of the reformer.

## Description

### Technical Field

The present invention relates to a hydrogen generator and particularly to a hydrogen generator which includes a hydro-desulfurizer configured to remove a sulfur component in a raw material gas and generates a fuel gas, containing hydrogen as a major component, from the raw material gas in the presence of a catalyst.

### Background Art

A raw material gas of a hydrogen generator contains a sulfur component as an odorant or an impurity. Since the sulfur component poisons a catalyst of the hydrogen generator, the hydrogen generator is provided with a desulfurizer which removes the sulfur component from the raw material gas.

In the desulfurizer, adsorptive desulfurization or hydrodesulfurization is mainly used. To reduce the size and maintenance of the desulfurizer, the hydrodesulfurization is normally adopted. In the case of the hydrodesulfurization, to maintain the temperature of a hydrodesulfurization catalyst at a proper temperature, the desulfurizer needs to be heated. Various methods have been proposed as a method of heating the hydrodesulfurization catalyst to the proper temperature.

For example, according to a reformer in PTL 1, a reforming catalyst layer is arranged at an outer periphery of a burner, and a hydro-desulfurizer is arranged at an outer periphery of the reforming catalyst layer via a heat insulating material layer. According to a hydrogen generator in PTL 2, a heat exchanger is arranged above a reactor vessel, and a hydro-desulfurizer is arranged outside the heat exchanger. The hydro-desulfurizer is heated by a hydrogen-containing gas which is flowing through or has flowed through the heat exchanger. Further, according to a fuel cell electric power generator in PTL 3, a fuel to be supplied to a desulfurizer is preheated by a fuel preheater, and this increases the temperature of the desulfurizer. In a case where the temperature of the desulfurizer is not high enough, the desulfurizer is heated by an electric heater.

### Citation List

### Patent Literature

PTL 1: Japanese Laid-Open Patent Application Publication No. 2010-058995
PTL 2: Japanese Laid-Open Patent Application Publication No. 2012-41238
PTL 3: Japanese Laid-Open Patent Application Publication No. 10-214632

### Summary of Invention

### Technical Problem

Prior arts such as PTLs 1 to 3 do not consider a temperature distribution of the hydrodesulfurization catalyst which causes an increase in a mounting amount of hydrodesulfurization catalyst. Therefore, there is still room for improvement from the viewpoint of the reduction in the mounting amount of hydrodesulfurization catalyst.

The present invention was made to solve the above problem, and an object of the present invention is to provide a hydrogen generator which reduces the mounting amount of hydrodesulfurization catalyst while maintaining its small size and high efficiency.

### Solution to Problem

A hydrogen generator according to an aspect of the present invention includes: a reformer configured to generate a fuel gas, containing hydrogen as a major component, from a raw material gas; a combustor configured to heat the reformer; a hydro-desulfurizer configured to be heated by the reformer to remove a sulfur compound contained in the raw material gas by a hydrodesulfurization reaction; and a cooler configured to cool down the hydro-desulfurizer, wherein: the reformer includes a low temperature portion and a high temperature portion higher in temperature than the low temperature portion; and the cooler is provided at a position corresponding to the high temperature portion of the reformer.

### Advantageous Effects of Invention

The present invention is configured as explained above and has an effect of being able to provide the hydrogen generator which reduces the mounting amount of hydrodesulfurization catalyst while maintaining its small size and high efficiency.

The above object, other objects, features, and advantages of the present invention will be made clear by the following detailed explanation of preferred embodiments with reference to the attached drawings.

### Brief Description of Drawings

Fig. 1 is a cross-sectional view showing a hydrogen generator according to Embodiment 1 of the present invention.
Fig. 2 is a cross-sectional view showing a cooler of the hydrogen generator of Fig. 1.
Fig. 3 is a diagram which shows the hydrogen generator and in which an upper side of line C-C' is a cross-sectional view taken along line A-A' of Fig. 1, and a lower side of line C-C' is a cross-sectional view taken along line B-B' of Fig. 2.
Fig. 4 is a developed view showing a hydro-desulfurizer and the cooler shown in Fig. 3.
Fig. 5 is a graph showing a temperature distribution of the hydro-desulfurizer of Fig. 4.
Fig. 6 is a cross-sectional view showing the hydrogen generator according to Embodiment 2 of the present invention.
Fig. 7 is a developed view showing the hydro-desulfurizer and the cooler of Fig. 6.

### Description of Embodiments

### Findings on which the present invention is based

The present inventors have diligently studied in order to reduce a mounting amount of hydrodesulfurization catalyst in a hydrogen generator while maintaining a small size and high efficiency of the hydrogen generator. As a result, the present inventors have found the following problems of the prior arts.

According to the reformer of PTL 1, the size reduction is realized in such a manner that the hydro-desulfurizer is arranged at the outer periphery of the reforming catalyst layer via the heat insulating material layer. Further, the high efficiency is realized by using the heat of the burner for the heating of the reforming catalyst layer and the hydro-desulfurizer. In addition, the heat insulating material layer is interposed between the reforming catalyst layer and the hydro-desulfurizer to prevent the temperature of the hydro-desulfurizer from becoming too high.

However, a temperature distribution of the reforming catalyst layer is not considered. To be specific, the temperature distribution of combustion heat by the burner and the temperature distribution of a combustion gas from the burner are nonuniform. Therefore, the amount of heat applied to the reforming catalyst layer from the combustion heat by the burner and the combustion gas from the burner is not uniform. Further, the degree of progress of a reforming reaction (endothermic reaction) of the heated reforming catalyst layer is nonuniform. Therefore, the degree of heat absorption by the reforming reaction in the reforming catalyst layer is not uniform. Therefore, the temperature distribution is generated in the reforming catalyst layer in a direction parallel to the burner. Also, regarding a circumferential direction of the reforming catalyst layer, the temperature distribution is generated since the combustion heat, the heat from a flue gas, the flow of the flue gas, the flow of a raw material gas, and the flow of a reformed gas causing the endothermic reaction deviate.

Although there is the temperature distribution of the reforming catalyst layer in the parallel direction and the circumferential direction, the heat transfer from the reforming catalyst layer to the hydro-desulfurizer is uniformly suppressed by the heat insulating material layer. As a result, the temperature distribution of the hydro-desulfurizer heated by the reforming catalyst layer also becomes nonuniform. At a portion of the hydro-desulfurizer whose temperature is higher than a proper temperature, the hydrodesulfurization catalyst deteriorates by the heat.

In preparation for the heat deterioration of the hydrodesulfurization catalyst, the mounting amount of hydrodesulfurization catalyst needs to be increased. However, this increases the size and cost of the hydrogen generator. Further, since the amount of heat for increasing the temperature of the hydrodesulfurization catalyst to the proper temperature increases, the efficiency of the hydrogen generator decreases, and a start-up time of the hydrogen generator increases.

According to the hydrogen generator of PTL 2 and the fuel cell electric power generator of PTL 3, the hydrodesulfurization catalyst is not directly heated by the reformer but is heated by the heat exchanger or the fuel preheater. Therefore, the temperature distribution of the reforming catalyst layer does not matter. However, the heat exchanger or the fuel preheater needs to be provided, and this increases the size of the generator. In addition, according to the fuel cell electric power generator of PTL 3, the desulfurizer is heated by the electric heater, and this decreases the efficiency of the generator.

The present invention was made based on the above findings and is a hydrogen generator capable of reducing the mounting amount of hydrodesulfurization catalyst while maintaining its small size and high efficiency by considering the temperature distribution of the hydrodesulfurization catalyst

### Embodiments

A hydrogen generator according to a first aspect of the present invention includes: a reformer configured to generate a fuel gas, containing hydrogen as a major component, from a raw material gas; a combustor configured to heat the reformer; a hydro-desulfurizer configured to be heated by the reformer to remove a sulfur compound contained in the raw material gas by a hydrodesulfurization reaction; and a cooler configured to cool down the hydro-desulfurizer, wherein: the reformer includes a low temperature portion and a high temperature portion higher in temperature than the low temperature portion; and the cooler is provided at a position corresponding to the high temperature portion of the reformer.

A hydrogen generator according to a second aspect of the present invention is configured such that: in the first aspect of the present invention, the hydro-desulfurizer includes therein a hydrodesulfurization passage through which the raw material gas flows; the cooler includes a cooling passage; and an inlet of the cooling passage is provided downstream of a middle point of the hydrodesulfurization passage.

Hereinafter, embodiments of the present invention will be specifically explained in reference to the drawings. In the following explanations and drawings, the same reference signs are used for the same or corresponding components, and a repetition of the same explanation is avoided.

### Embodiment 1

### Configuration of hydrogen generator

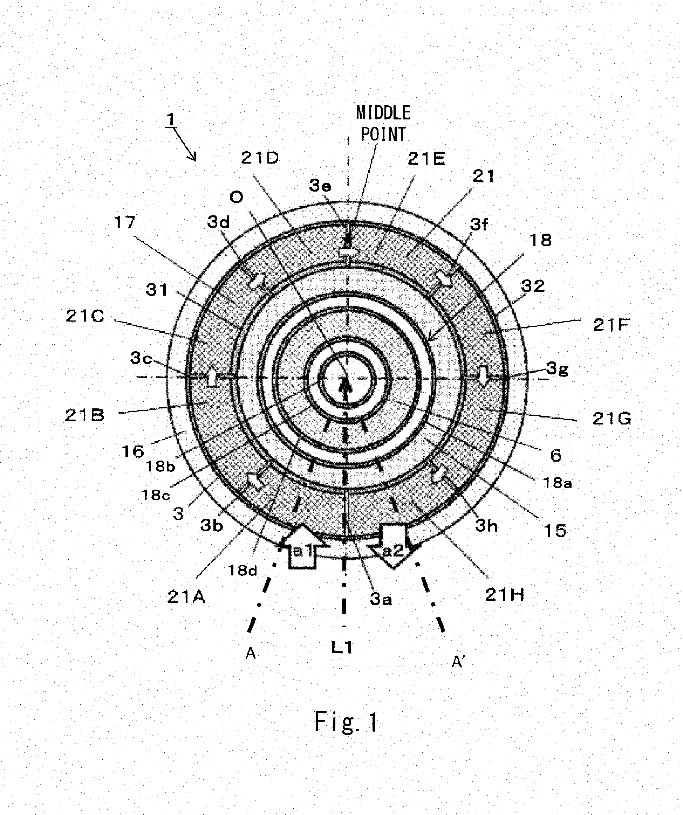

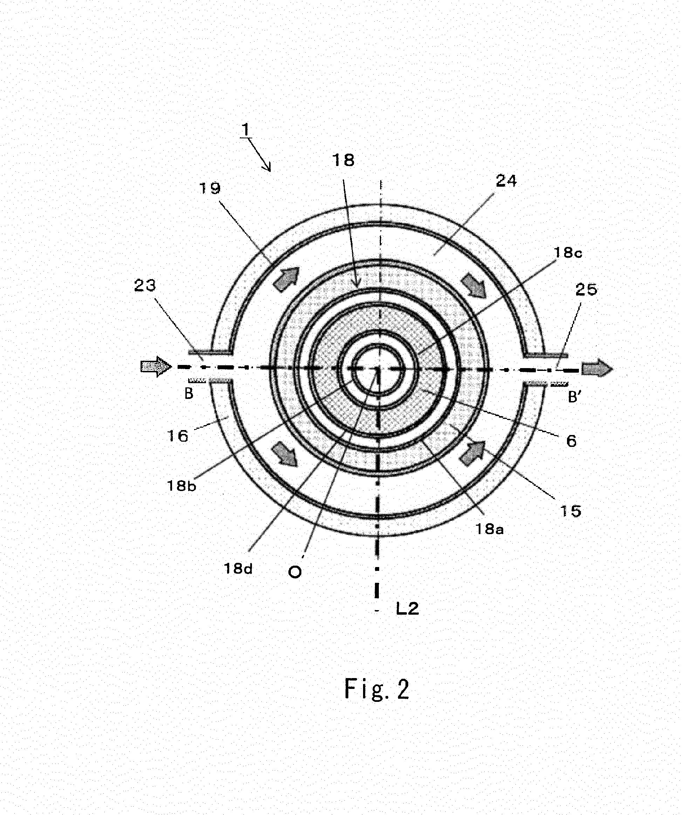

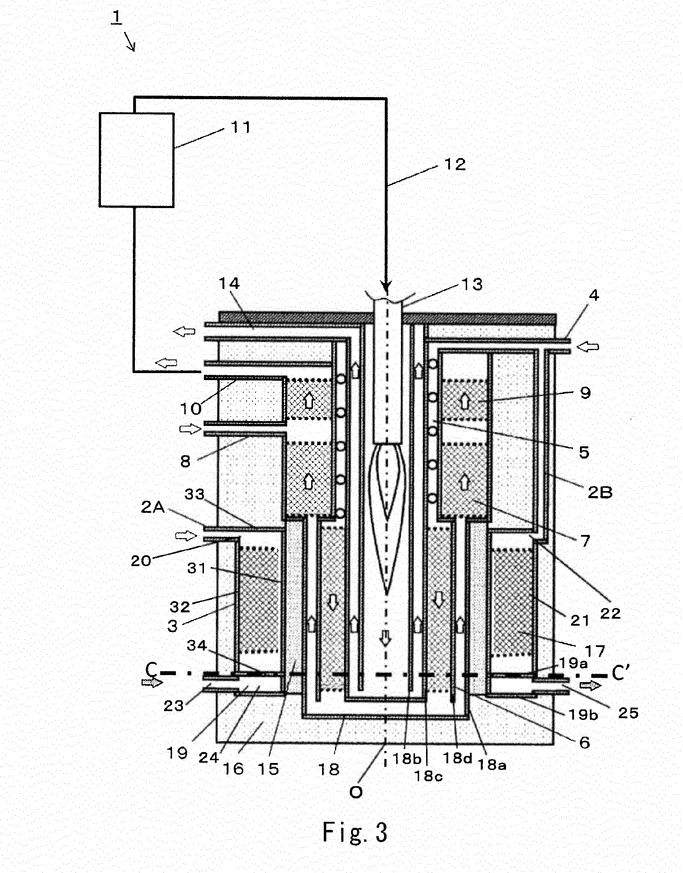

Fig. 1 is a cross-sectional view showing a hydrogen generator 1 according to Embodiment 1. Fig. 2 is a cross-sectional view showing the hydrogen generator 1 and taken along a cooler 19. Fig. 3 is a diagram which shows the hydrogen generator 1 and in which an upper side of line C-C' is a cross-sectional view taken along line A-A' of Fig. 1, and a lower side of line C-C' is a cross-sectional view taken along line B-B' of Fig. 2. For convenience sake, the following explanations are made on the basis that upper and lower directions in Fig. 3 respectively correspond to upper and lower directions of the hydrogen generator 1. However, the actual hydrogen generator 1 does not have such directions and is not limited to these directions. The hydrogen generator 1 is connected to a fuel cell 11. However, the hydrogen generator 1 may be connected to a different hydrogen utilizing device, or the hydrogen generator 1 may be used alone.

As shown in Fig. 3, the hydrogen generator 1 mainly includes a reforming catalyst layer (reformer) 6, a burner (combustor) 13, a hydro-desulfurizer 3, and a cooler 19. The hydrogen generator 1 may further include an evaporator 5, a shift catalyst layer 7, a selective oxidation catalyst layer 9, an inner heat insulating material 15, and an outer heat insulating material 16.

The hydrogen generator 1 includes a hollow columnar hydrogen generating unit 18. The hydrogen generating unit 18 is provided with the evaporator 5, the reforming catalyst layer 6, the shift catalyst layer 7, the selective oxidation catalyst layer 9, and the burner 13. The hydro-desulfurizer 3 and the cooler 19 are provided around the hydrogen generating unit 18 via the inner heat insulating material 15. Further, the outer heat insulating material 16 is provided around the hydrogen generating unit 18, the hydro-desulfurizer 3, and the cooler 19. The hydrogen generating unit 18 has the hollow columnar shape, but the shape thereof is not limited to this and may be a square shape.

The hydrogen generating unit 18 includes an outer wall 18a and a plurality of (three in the present embodiment) dividing walls 18b, 18c, and 18d (18b to 18d). The hydrogen generating unit 18 includes a substantially columnar internal space surrounded by the outer wall 18a having a substantially cylindrical shape. The first to third dividing walls 18b to 18d each having a substantially cylindrical shape are arranged in the internal space so as to be concentric with the center of the outer wall 18a. With this, the internal space is divided into one columnar space and a plurality of (three in the present embodiment) cylindrical spaces.

The first dividing wall 18b is arranged at a center portion of the internal space. A columnar first space surrounded by the first dividing wall 18b is formed. An upper end of the first space is closed by a lid portion, and a lower end thereof is open. A first hole is formed on a part of the lid portion. The burner 13 is inserted into the first space through the first hole from above.

The second dividing wall 18c is arranged outside the first dividing wall 18b. A cylindrical second space is formed between the second dividing wall 18c and the first dividing wall 18b. An upper end of the second space is open through a second hole, and a lower end thereof is closed by a first lower surface. The second space is connected to an exhaust gas pipe 14 through the second hole. The second space communicates with the first space through a gap between a lower end of the first dividing wall 18b and the first lower surface.

The third dividing wall 18d is arranged outside the second dividing wall 18c. A cylindrical third space is formed between the third dividing wall 18d and the second dividing wall 18c. An upper end of the third space is open through a third hole, and a lower end thereof is open. The third space is connected to a downstream raw material gas supply pipe 2B and a reforming water supply pipe 4 through the third hole.

A lower space of the third space is filled with a reforming catalyst. The reforming catalyst, the third dividing wall 18d, and the second dividing wall 18c constitute the reforming catalyst layer 6. A wire is arranged in an upper space of the third space so as to spirally wind around the second dividing wall 18c. The wire, the third dividing wall 18d, and the second dividing wall 18c constitute the evaporator 5.

The outer wall 18a is arranged outside the third dividing wall 18d. A cylindrical fourth space is formed between the outer wall 18a and the third dividing wall 18d. An upper end of the fourth space is open through a fourth hole, and a lower end thereof is closed by a second lower surface. A fifth hole is open on the outer wall 18a. The fourth space communicates with the third space through a gap between a lower end of the third dividing wall 18d and the second lower surface. The fourth space is connected to a fuel gas supply pipe 10 through the fourth hole. Further, the fourth space is connected to an air supply pipe 8 through the fifth hole.

A lower space of the fourth space is arranged around the reforming catalyst layer 6, and an upper space of the fourth space is arranged around the evaporator 5. A lower region of the upper space of the fourth space is filled with a shift catalyst. The shift catalyst, the third dividing wall 18d, and the outer wall 18a constitute the shift catalyst layer 7. An upper region of the upper space of the fourth space is filled with a selective oxidation catalyst. The selective oxidation catalyst, the third dividing wall 18d, and the outer wall 18a constitute the selective oxidation catalyst layer 9. The fifth hole is arranged between the shift catalyst layer 7 and the selective oxidation catalyst layer 9.

The burner 13 is a combustor configured to combust a combustible gas to heat the reforming catalyst layer 6. The burner 13 is connected to the fuel cell 11 by an off gas pipe 12, and the combustible gas is supplied through the off gas pipe 12 to the burner 13. Examples of the combustible gas include the raw material gas and a fuel gas (off gas) unconsumed in the fuel cell 11. The combustor is not limited to the burner as long as it can heat the reforming catalyst layer 6 to the proper temperature. A city gas or the like is used as the raw material gas.

The reforming catalyst layer 6 is a reformer which generates the fuel gas, containing hydrogen as a major component, from the raw material gas by the reforming reaction. The reforming catalyst layer 6 is heated by the combustion heat of the burner 13 and the combustion gas discharged from the burner 13 so as to have a proper temperature of the reforming catalyst, such as 650°C. In the reforming catalyst layer 6, the reforming reaction that is the endothermic reaction occurs in the presence of the reforming catalyst. By such heating and heat absorption, a low temperature portion and a high temperature portion having a higher temperature than the low temperature portion are formed at the reforming catalyst layer 6.

The evaporator 5 is a device which generates steam from water (reforming water) used in a steam-reforming reaction. The evaporator 5 is connected to a reforming water supply unit (not shown) by the reforming water supply pipe 4. In the evaporator 5, a space formed by a spiral metal rod serves as a passage of the reforming water. The reforming water evaporates while flowing through this passage.

The shift catalyst layer 7 is a carbon monoxide remover which causes a shift reaction of carbon monoxide in the fuel gas in the presence of the shift catalyst to remove the carbon monoxide from the fuel gas. The selective oxidation catalyst layer 9 is a carbon monoxide remover which oxidizes the carbon monoxide in the fuel gas by oxygen in the presence of the selective oxidation catalyst to remove the carbon monoxide from the fuel gas. The selective oxidation catalyst layer 9 is provided downstream of the shift catalyst layer 7. The air supply pipe 8 is connected to a portion located downstream of the shift catalyst layer 7 and upstream of the selective oxidation catalyst layer 9. Air containing the oxygen used in the oxidation is supplied to the selective oxidation catalyst layer 9 through the air supply pipe 8.

The hydro-desulfurizer 3 is a reactor which removes a sulfur compound, contained in the raw material gas, by hydrodesulfurization in the presence of a hydrodesulfurization catalyst 17. The hydro-desulfurizer 3 is heated by the reforming catalyst layer 6 so as to have a proper temperature of the hydrodesulfurization catalyst 17, such as 200 to 300°C. The hydro-desulfurizer 3 includes therein a passage (hydrodesulfurization passage) 21 through which the raw material gas flows.

The cooler 19 is provided at a position corresponding to the high temperature portion of the reforming catalyst layer 6 and cools down the hydro-desulfurizer 3. The cooler 19 includes a cooling passage 24 which cools down the hydro-desulfurizer 3. In the present embodiment, the air is used as a cooling medium. However, gases other than the air and liquids such as water may be used. Further, the cooler 19 is arranged under the hydro-desulfurizer 3. However, the position of the cooler 19 is not limited as long as the cooler 19 can cool down a high temperature portion of the hydro-desulfurizer 3.

### Configuration of hydro-desulfurizer

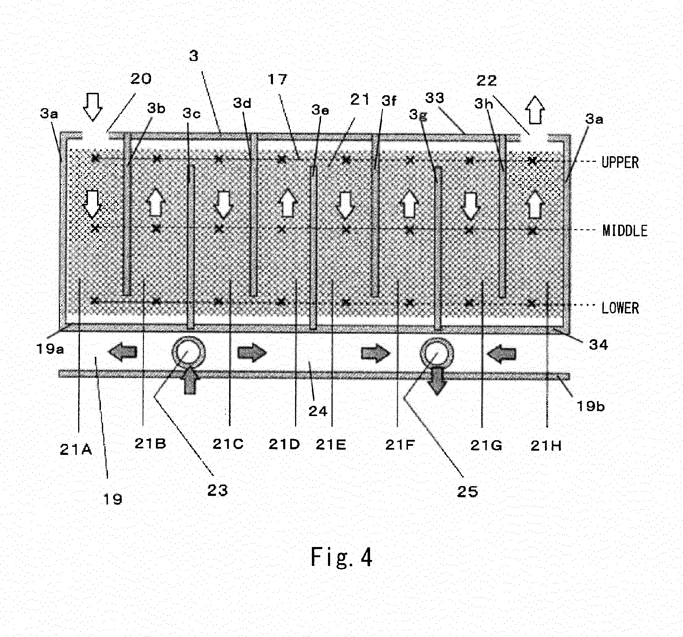

Fig. 4 is a developed view showing the hydro-desulfurizer 3 and taken along line O-L1 of Fig. 1 and a developed view showing the cooler 19 and taken along line O-L2 of Fig. 2. It should be noted that O denotes a central axis of the hydrogen generator 1. In the hydrogen generator 1, the hydrogen generating unit 18, the hydro-desulfurizer 3, and the cooler 19 are arranged such that centers thereof coincide with the central axis O.

As shown in Fig. 3, the hydro-desulfurizer 3 has an annular shape and surrounds an outer periphery of a lower portion of the outer wall 18a via the inner heat insulating material 15. The hydro-desulfurizer 3 includes a cylindrical first inner tube 31 and a cylindrical first outer tube 32. The first inner tube 31 is concentrically arranged in the first outer tube 32. An annular space between the first inner tube 31 and the first outer tube 32 constitutes the raw material gas passage (hydrodesulfurization passage) 21.

The hydrodesulfurization passage 21 is filled with the hydrodesulfurization catalyst 17 and an adsorbent. The hydrodesulfurization catalyst 17 is a catalyst which accelerates a reaction of converting the sulfur component in the raw material gas into hydrogen sulfide. Examples of the hydrodesulfurization catalyst 17 include a catalyst made of copper oxide and zinc oxide. Used as the adsorbent is, for example, a zinc oxide-based adsorbent which adsorbs the hydrogen sulfide.

An upper end of the hydrodesulfurization passage 21 is closed by a first top plate 33, and a lower end thereof is closed by a first bottom plate 34. The first top plate 33 is provided with two holes. One of the holes is an inlet (raw material inlet) 20 through which the raw material is supplied and is connected to a raw material gas supply unit (not shown) by an upstream raw material gas supply pipe 2A. The other hole is an outlet (raw material outlet) 22 through which the raw material is discharged and is connected to the downstream raw material gas supply pipe 2B. The downstream raw material gas supply pipe 2B is coupled to the reforming water supply pipe 4 and is connected to the evaporator 5 of the first space.

As shown in Fig. 1, the hydrodesulfurization passage 21 is divided by a plurality of dividing plates. In the present embodiment, the hydrodesulfurization passage 21 is divided by first to eighth dividing plates 3a to 3h into eight portions (passage portions) 21A to 21H. The dividing plates 3a to 3h radially extend from the center O of the hydro-desulfurizer 3 and are arranged at regular intervals. Inner ends of the dividing plates 3a to 3h are fixed to the first inner tube 31, and outer ends thereof are fixed to the first outer tube 32. A gap may be formed between the inner end of each of the dividing plates 3a to 3h and the first inner tube 31, and/or a gap may be formed between the outer end of each of the dividing plates 3a to 3h and the first outer tube 32.

The first passage portion 21A, the second passage portion 21B, the third passage portion 21C, the fourth passage portion 21D, the fifth passage portion 21E, the sixth passage portion 21F, the seventh passage portion 21G, and the eighth passage portion 21 H are arranged in this order in the circumferential direction. The first passage portion 21A is a portion where the raw material gas flows through the raw material inlet 20 (Fig. 3) into the hydrodesulfurization passage 21 as shown by an arrow a1. The first passage portion 21A is arranged at an upstream side of the hydrodesulfurization passage 21. The eighth passage portion 21H is a portion where the raw material gas flows out from the hydrodesulfurization passage 21 through the raw material outlet 22 (Fig. 3) as shown by an arrow a2. The eighth passage portion 21H is arranged at a downstream side of the hydrodesulfurization passage 21. As above, the first passage portion 21A at the upstream side and the eighth passage portion 21H at the downstream side are adjacent to each other with the first dividing plate 3a interposed therebetween. The raw material inlet 20 is provided at the first passage portion 21A, and the raw material outlet 22 is provided at the eighth passage portion 21H. However, the positions of the raw material inlet 20 and the raw material outlet 22 are not limited to these. For example, the raw material inlet 20 may be provided at the eighth passage portion 21 H, and the raw material outlet 22 may be provided at the first passage portion 21A.

As shown in Fig. 4, an upper end of the first dividing plate 3a is fixed to the first top plate 33, and a lower end thereof is fixed to the first bottom plate 34. The first passage portion 21A and the eighth passage portion 21H adjacent to each other are separated from each other by the first dividing plate 3a. Therefore, one passage in which the raw material gas flows from the first passage portion 21A to the eighth passage portion 21H is formed.

The second to eighth dividing plates 3b to 3h other than the first dividing plate 3a are alternately fixed to the first top plate 33 and the first bottom plate 34. For example, an upper end of the second dividing plate 3b is fixed to the first top plate 33, and a gap is formed between a lower end of the second dividing plate 3b and a second bottom plate 19b. A lower end of the third dividing plate 3c is fixed to the first bottom plate 34, and a gap is formed between an upper end of the third dividing plate 3c and the first top plate 33. As above, the gaps are formed alternately. The passage portions 21A to 21H communicate with one another through these gaps, so that the hydrodesulfurization passage 21 meanders in the upper-lower direction.

### Configuration of cooler

As shown in Fig. 3, the cooler 19 has an annular shape and surrounds the outer periphery of the lower portion of the outer wall 18a via the inner heat insulating material 15. The cooler 19 includes a cylindrical second inner tube and a cylindrical second outer tube. The second inner tube is concentrically arranged in the second outer tube. An annular space between the second inner tube and the second outer tube constitutes the cooling air passage (cooling passage) 24.

An upper end of the cooling passage 24 is closed by a second top plate 19a, and a lower end thereof is closed by the second bottom plate 19b. The second outer tube is provided with two holes. One of the holes is an inlet (air inlet) 23 into which the cooling air flows and is connected to an air supply unit (not shown). The other hole is an outlet (air outlet) 25 from which the cooling air flows out and is open to, for example, the atmosphere. The second top plate 19a also serves as the first bottom plate 34 of the hydro-desulfurizer 3. However, the second top plate 19a and the first bottom plate 34 may be provided separately.

Used as the air supply unit is, for example, a fan motor or a pump. The air supply unit may also serve as a supply unit of the combustion air to be supplied to the burner 13. Further, the cooling air discharged through the air outlet 25 may be returned to the burner 13. Or, the air supply unit may also serve as a supply unit of oxidation air to be supplied to the selective oxidation catalyst layer 9.

As shown in Fig. 2, the air inlet 23 and the air outlet 25 are provided symmetrically in the circumferential direction of the cooling passage 24. With this, the air outlet 25 is provided at a position farthest from the air inlet 23. Thus, two passages are formed, through which the cooling air flows clockwise and counterclockwise from the air inlet 23 to the air outlet 25.

As shown in Fig. 4, the air inlet 23 and the air outlet 25 are provided between the raw material inlet 20 and raw material outlet 22 of the hydro-desulfurizer 3. The air inlet 23 is arranged closer to the raw material inlet 20 than to the raw material outlet 22. For example, the air inlet 23 is arranged between the second passage portion 21B and the third passage portion 21C in the circumferential direction. The air outlet 25 is arranged closer to the raw material outlet 22 than to the raw material inlet 20. For example, the air outlet 25 is arranged between the sixth passage portion 21F and the seventh passage portion 21G in the circumferential direction.

### Operations of hydrogen generator

As shown in Fig. 3, when the hydrogen generator 1 operates, the combustible gas and the air are supplied to the burner 13. The combustible gas may be the raw material gas supplied from the raw material gas supply unit or the combustible gas for the burner 13.

The burner 13 combusts the raw material gas by the oxygen in the air. The high-temperature combustion gas is discharged from the burner 13 to flow downward in the first space. The combustion gas flows through the gap between the lower end of the first dividing wall 18b and the first lower surface and then flows upward in the second space to flow out through the exhaust gas pipe 14.

The evaporator 5 and the reforming catalyst layer 6 are heated by the combustion heat of the burner 13 and the high-temperature combustion gas. The shift catalyst layer 7 and the selective oxidation catalyst layer 9 are heated by the high-temperature evaporator 5. Further, the hydro-desulfurizer 3 is heated by the high-temperature reforming catalyst layer 6 via the inner heat insulating material 15.

At this time, the reforming water is supplied through the reforming water supply pipe 4 to the evaporator 5 to evaporate. The reforming water as the steam flows into the reforming catalyst layer 6.

The raw material gas is supplied through the upstream raw material gas supply pipe 2A to flow into the hydro-desulfurizer 3. The sulfur in the raw material gas reacts in the presence of the hydrodesulfurization catalyst having the proper temperature to be removed. The raw material gas from which the sulfur has been removed flows through the downstream raw material gas supply pipe 2B and then meets the steam of the evaporator 5 to flow into the reforming catalyst layer 6. The reforming reaction between the raw material gas and the steam occurs to generate the fuel gas.

The fuel gas flows through the gap between the lower end of the third dividing wall 18d and the second lower surface to flow into the shift catalyst layer 7. The carbon monoxide in the fuel gas is removed by the shift reaction in the shift catalyst layer 7, and the fuel gas then flows into the selective oxidation catalyst layer 9. The air also flows into the selective oxidation catalyst layer 9 through the air supply pipe 8. In the selective oxidation catalyst layer 9, the remaining carbon monoxide in the fuel gas is oxidized by the oxygen in the air to be removed. The fuel gas from which the carbon monoxide has been removed is supplied to the fuel cell 11 through the fuel gas supply pipe 10. The fuel gas unconsumed in the fuel cell 11 is supplied as the combustible gas through the off gas pipe 12 to the burner 13.

### Actions of cooler

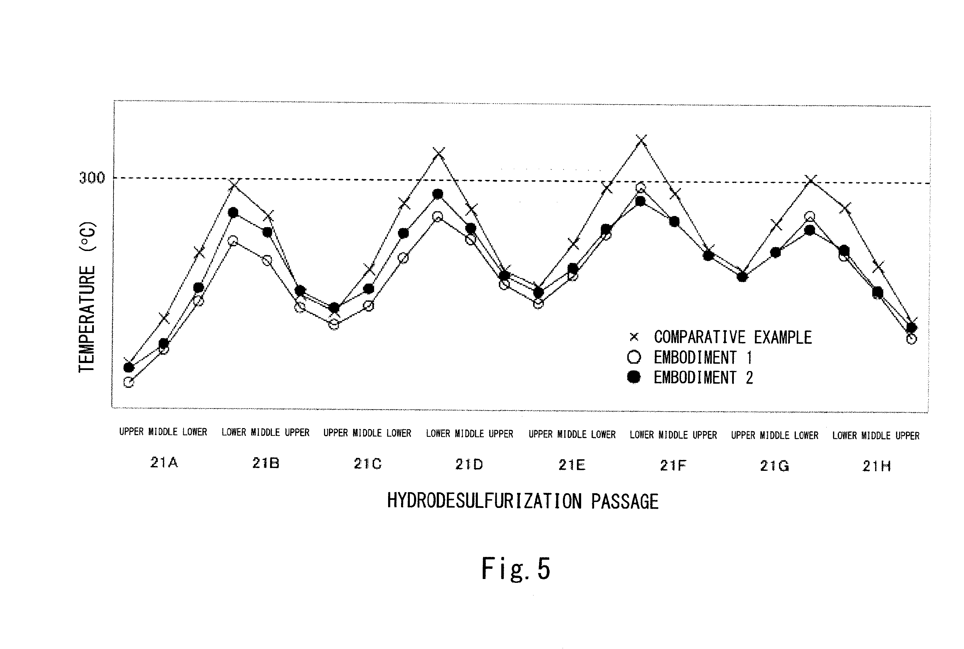

Fig. 5 is a graph showing a temperature distribution of the hydro-desulfurizer 3. In Fig. 5, a vertical axis denotes temperatures (°C), and a horizontal axis denotes positions in the hydro-desulfurizer 3. These positions are positions shown by X marks in Fig. 4. As Comparative Example, X marks in Fig. 5 denote temperatures of the hydro-desulfurizer of the hydrogen generator at which the cooler 19 is not provided. In addition, O marks denote temperatures of the hydro-desulfurizer 3 of the hydrogen generator 1 according to Embodiment 1.

As shown in Fig. 3, a flame generating the combustion heat of the burner 13 extends in the upper-lower direction in the first space. The temperature of the flame differs depending on positions in the flame. The combustion gas exchanges the heat with the reforming catalyst layer 6 while flowing downward in the first space from the burner 13 and then flowing upward in the second space. Therefore, the temperature of the combustion gas also differs depending on positions in the flow of the combustion gas. As above, the combustion temperature of the burner 13 and the temperature of the combustion gas, which heat the reforming catalyst layer 6, are not uniform in the upper-lower direction. Therefore, the temperature of the heated reforming catalyst layer 6 differs in the upper-lower direction, so that the high temperature portion and the low temperature portion are formed in the reforming catalyst layer 6. Further, the degree of occurrence of the reforming reaction (endothermic reaction) differs depending on the temperature of the reforming catalyst layer 6. As a result, the reforming catalyst layer 6 has a temperature gradient in which the temperature increases toward a lower side. For example, an upstream side (upper portion) of the reforming catalyst layer 6 has a temperature of 300 to 400°C whereas a downstream side (lower portion) thereof has a temperature of not lower than 600°C.

Since the hydro-desulfurizer 3 is heated by the reforming catalyst layer 6 having this temperature gradient, the temperature of the hydro-desulfurizer 3 increases toward the lower side. As shown by the X marks in Fig. 5, upper positions of the passage portions 21A to 21H of the hydro-desulfurizer 3 are low in temperature, such as about 200°C whereas lower positions of the passage portions 21 A to 21H of the hydro-desulfurizer 3 are high in temperature, such as not lower than 300°C.

As above, since the raw material gas flows as shown in Fig. 4 through the hydro-desulfurizer 3 having the temperature gradient, the temperature of the raw material gas also changes in the upper-lower direction. Specifically, the raw material gas flows through the raw material inlet 20 into the hydrodesulfurization passage 21. The raw material gas flows downward through the first passage portion 21A, flows upward through the second passage portion 21B, and flows downward through the third passage portion 21C. As above, the raw material gas flows upward and downward while alternately changing the flow direction. Then, the raw material gas flows out from the raw material outlet 22.

On the other hand, in the hydrogen generator 1 according to Embodiment 1, the cooler 19 is provided under the hydro-desulfurizer 3. As shown in Fig. 4, in the cooler 19, the air flows in through the air inlet 23, flows through the cooling passage 24, and flows out from the air outlet 25. The air flowing through the cooling passage 24 cools down the high-temperature hydro-desulfurizer 3. Therefore, as shown by the O marks in Fig. 5, the temperatures of the hydro-desulfurizer 3 are lower than the temperatures shown by the X marks.

Especially, since the cooler 19 cools down the hydro-desulfurizer 3 from below, the reductions in temperatures of the lower positions of the passage portions 21A to 21H are more significant than the reductions in temperatures of the upper positions of the passage portions 21A to 21H. Therefore, the temperature of the high temperature portion, located at the lower portion, of the hydro-desulfurizer 3 is prevented from becoming not lower than the proper temperature of the hydrodesulfurization catalyst 17. Thus, the heat deterioration of the hydrodesulfurization catalyst 17 can be prevented.

The reduction in temperature of the high temperature portion of the hydro-desulfurizer 3 is more significant than the reduction in temperature of the low temperature portion of the hydro-desulfurizer 3. Therefore, while maintaining the temperature of the low temperature portion of the hydro-desulfurizer 3, the temperature of the entire hydrodesulfurization catalyst 17 can be uniformized. For example, the temperature of the entire hydrodesulfurization catalyst 17 is maintained at 200 to 300°C. More preferably, the temperature of the entire hydrodesulfurization catalyst 17 is 250 to 300°C, and the temperature difference is about 50°C. With this, the hydrodesulfurization catalyst 17 is maintained at the proper temperature.

### Actions and Effects

The cooler 19 is provided at a position corresponding to the high temperature portion of the reforming catalyst layer 6. With this, the cooler 19 can cool down the high temperature portion of the hydro-desulfurizer 3 heated by the high temperature portion of the reforming catalyst layer 6. As a result, the heat deterioration of the hydrodesulfurization catalyst 17 can be prevented, and the increase in the mounting amount of hydrodesulfurization catalyst 17 in preparation for the heat deterioration can be suppressed. Therefore, the increase in size, cost, and start-up time of the hydrogen generator 1 and the decrease in efficiency of the hydrogen generator 1 can be prevented.

Further, the cooler 19 cools down the hydro-desulfurizer 3 from the high temperature portion. With this, the increase in temperature of the high temperature portion of the hydro-desulfurizer 3 can be suppressed while suppressing the decrease in temperature of the low temperature portion of the hydro-desulfurizer 3. As a result, the temperature of the entire hydrodesulfurization catalyst 17 can be maintained at a substantially uniform temperature close to an upper limit of the proper temperature. Therefore, the entire hydrodesulfurization catalyst 17 can adequately fulfill its function. On this account, the mounting amount of hydrodesulfurization catalyst 17 can be suppressed.

The burner 13 and a passage of the combustion gas are formed such that the high temperature portion of the reforming catalyst layer 6 is located at the lower side of the reforming catalyst layer 6, and the high temperature portion of the hydro-desulfurizer 3 is located at the lower side of the hydro-desulfurizer 3. By utilizing a property in which heat moves from a lower side to an upper side, the heat of the high temperature portions of the reforming catalyst layer 6 and the hydro-desulfurizer 3 can be moved to the upper side. As a result, the temperature difference in each of the reforming catalyst layer 6 and the hydro-desulfurizer 3 can be reduced.

The hydro-desulfurizer 3 is arranged outside the reforming catalyst layer 6. With this, the heat of the reforming catalyst layer 6 can be utilized for the heating of the hydrodesulfurization catalyst 17. Therefore, the efficiency of the hydrogen generator 1 is increased, and the size of the hydrogen generator 1 is reduced.

### Embodiment 2

The hydrogen generator 1 according to Embodiment 2 is different from the hydrogen generator 1 according to Embodiment 1 regarding the positions of the air inlet 23 and the air outlet 25 relative to the positions of the raw material inlet 20 and the raw material outlet 22.

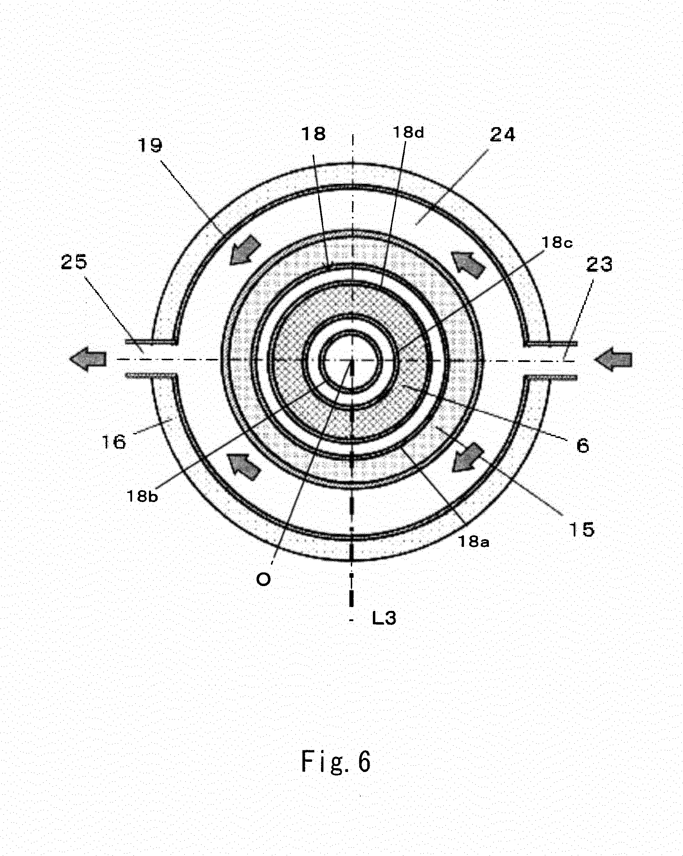

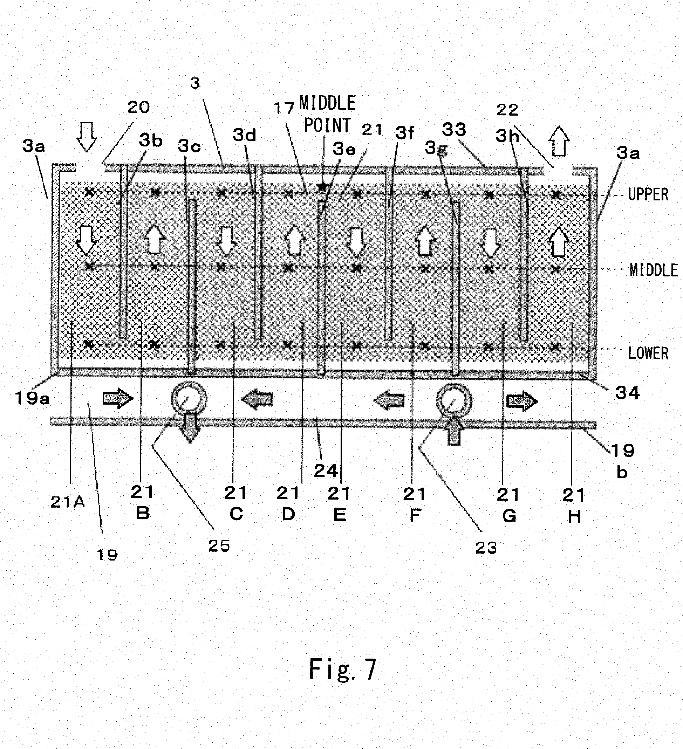

Fig. 6 is a cross-sectional view of the hydrogen generator 1 according to Embodiment 2. Fig. 7 is a developed view showing the hydro-desulfurizer 3 and taken along line O-L1 of Fig. 1 and a developed view showing the cooler 19 and taken along line O-L3 of Fig. 6. As shown in Fig. 7, the air inlet 23 is arranged closer to the raw material outlet 22 than to the raw material inlet 20. In the present embodiment, the air inlet 23 is arranged between the sixth passage portion 21F and the seventh passage portion 21G in the circumferential direction.

It is preferable that the position of the air inlet 23 be located downstream of a circumferential-direction middle point of the hydrodesulfurization passage 21. The middle point is a position by which the hydrodesulfurization passage 21 is divided into two equal parts in the circumferential direction. In the present embodiment, the middle point corresponds to a position opposed to the fifth dividing plate 3e.

Further, it is preferable that the position of the air inlet 23 be located downstream of a position opposed to the raw material inlet 20. The position opposed to the raw material inlet 20 is a position linearly farthest from the raw material inlet 20. In the present embodiment, as shown in Fig. 1, the position opposed to the raw material inlet 20 is located at the fifth passage portion 21E opposed to the first passage portion 21A with which the raw material inlet 20 (Fig. 7) communicates.

Further, it is preferable that the position of the air inlet 23 be located downstream of a highest temperature portion of the hydro-desulfurizer 3 or the vicinity of the highest temperature portion. For example, as shown in Fig. 5, the highest temperature portion of the hydro-desulfurizer 3 is located between the fifth passage portion 21E and the sixth passage portion 21F. Examples of the vicinity of the highest temperature portion include: the fifth passage portion 21E including the highest temperature portion; and the sixth passage portion 21F.

Further, it is preferable that the position of the air inlet 23 be located upstream of the raw material outlet 22 in the circumferential direction. Further, it is preferable that the position of the air inlet 23 be located upstream of the passage portion (the eighth passage portion 21H in the present embodiment) adjacent in the circumferential direction to the first passage portion 21A including the raw material inlet 20.

Further, it is preferable that the position of the air inlet 23 be located within a range of 180-360° around the center of the hydro-desulfurizer 3 from an upstream end of the hydrodesulfurization passage 21. Especially, it is more preferable that the position of the air inlet 23 be located within a range of 180-315° from the upstream end of the hydrodesulfurization passage 21. The upstream end of the hydrodesulfurization passage 21 is the raw material inlet 20 or the vicinity of the raw material inlet 20. In the present embodiment, the upstream end corresponds to the first passage portion 21 A side of the first dividing plate 3a.

The air outlet 25 is arranged closer to the raw material inlet 20 than to the raw material outlet 22. In the present embodiment, the air outlet 25 is arranged between the second passage portion 21B and the third passage portion 21C in the circumferential direction. The position of the air outlet 25 is not especially limited, but the air outlet 25 is provided so as to be opposed to the air inlet 23.

According to the above configuration, as with Embodiment 1, the cooler 19 is provided at a position corresponding to the high temperature portion of the reforming catalyst layer 6. With this, the heat deterioration of the hydrodesulfurization catalyst 17 can be prevented, and the temperature of the entire hydrodesulfurization catalyst 17 can be maintained at a substantially uniform temperature close to the upper limit of the proper temperature. The burner 13 and the passage of the combustion gas are formed such that the high temperature portion of the reforming catalyst layer 6 is located at the lower side of the reforming catalyst layer 6, and the high temperature portion of the hydro-desulfurizer 3 is located at the lower side of the reforming catalyst layer 6. With this, the temperature difference in each of the reforming catalyst layer 6 and the hydro-desulfurizer 3 can be reduced. Further, the hydro-desulfurizer 3 is arranged outside the reforming catalyst layer 6. With this, the heat of the reforming catalyst layer 6 can be utilized for the heating of the hydrodesulfurization catalyst 17.

The raw material gas flows from the raw material inlet 20 through the hydrodesulfurization passage 21 to the raw material outlet 22 in the circumferential direction while being heated by the reforming catalyst layer 6. Therefore, the temperature of the raw material gas increases toward the downstream side of the hydrodesulfurization passage 21, and therefore, the temperature of the hydrodesulfurization catalyst 17 of the raw material outlet 22 becomes higher than the temperature of the hydrodesulfurization catalyst 17 of the raw material inlet 20.

The air inlet 23 is arranged closer to the raw material outlet 22 than to the raw material inlet 20. With this, the cooling air can flow in through the air inlet 23 to cool down the high-temperature hydrodesulfurization catalyst 17 located in the vicinity of the raw material outlet 22. This cooling air is the cooling air which has not been increased in temperature by cooling down the hydrodesulfurization catalyst 17 located in the vicinity of the air inlet 23. Therefore, the temperature of the cooling air is low, so that the cooling air can cool down the high-temperature hydrodesulfurization catalyst 17 to the proper temperature. On this account, the heat deterioration of the hydrodesulfurization catalyst 17 can be more surely prevented.

The air inlet 23 is provided downstream of the circumferential-direction middle point of the hydrodesulfurization passage 21. With this, the low-temperature cooling air flowing in through the air inlet 23 can cool down to the proper temperature the portion which is located downstream of the middle point of the hydrodesulfurization passage 21 and tends to become a high temperature. Thus, the heat deterioration of the hydrodesulfurization catalyst 17 can be prevented.

Further, the air inlet 23 is provided downstream of the position opposed to the raw material inlet 20. The temperature of the position opposed to the raw material inlet 20 tends to become the highest. Therefore, the low-temperature cooling air flowing in through the air inlet 23 can cool down to the proper temperature the position of the hydrodesulfurization passage 21 which tends to become the high temperature. With this, the heat deterioration of the hydrodesulfurization catalyst 17 can be prevented.

Further, the air inlet 23 is provided downstream of the highest temperature portion of the hydro-desulfurizer 3 or the vicinity of the highest temperature portion. The low-temperature cooling air flowing in through the air inlet 23 can cool down to the proper temperature the downstream side of the highest temperature portion of the hydro-desulfurizer 3 or the vicinity of the highest temperature portion. With this, the heat deterioration of the hydrodesulfurization catalyst 17 can be prevented.

Further, the air inlet 23 is provided upstream of the passage portion adjacent in the circumferential direction to the first passage portion 21A at which the raw material inlet 20 is located. Since the eighth passage portion 21H at which the raw material outlet 22 is located is normally located at a downstream portion of the hydrodesulfurization passage 21, the eighth passage portion 21H becomes the highest in temperature. However, as shown in Fig. 5, the eighth passage portion 21H is adjacent to the first passage portion 21A at which the raw material inlet 20 is located and whose temperature is the lowest. Therefore, the temperature of the eighth passage portion 21H is reduced by the heat exchange with the first passage portion 21A. On this account, the fifth to seventh passage portions 21E to 21G located upstream of the eighth passage portion 21H are high in temperature. The low-temperature cooling air flowing in through the air inlet 23 can cool down to the proper temperature the high-temperature passage portions located upstream of the eighth passage portion 21H adjacent to the first passage portion 21A. With this, the heat deterioration of the hydrodesulfurization catalyst 17 can be prevented.

The air inlet 23 is arranged close to the raw material outlet 22, and the air outlet 25 is arranged close to the raw material inlet 20. The low-temperature cooling air flowing in through the air inlet 23 first cools down the hydrodesulfurization catalyst 17 of the high-temperature fifth to eighth passage portions 21 E to 21 H located in the vicinity of the raw material outlet 22. The cooling air increased in temperature by cooling down these high temperature portions cools down the hydrodesulfurization catalyst 17 of the low-temperature first to fourth passage portions 21A to 21D located in the vicinity of the raw material inlet 20. With this, as shown in Fig. 5, in the high-temperature fifth to eighth passage portions 21E to 21H, the temperature of the hydrodesulfurization catalyst 17 according to Embodiment 2 is lower than the temperature of the hydrodesulfurization catalyst 17 according to Embodiment 1. In contrast, in the low-temperature first to fourth passage portions 21 A to 21D, the temperature of the hydrodesulfurization catalyst 17 according to Embodiment 2 is higher than the temperature of the hydrodesulfurization catalyst 17 according to Embodiment 1. As above, the temperature of the entire hydrodesulfurization catalyst 17 can be set to be high and uniform within a proper temperature range. As a result, the hydrodesulfurization catalyst 17 can function efficiently.

### Other Embodiments

In each of the above embodiments, the hydrodesulfurization passage 21 is divided by the first to eighth dividing plates 3a to 3h. However, the number of dividing plates is not limited to eight. For example, the hydrodesulfurization passage 21 may be divided only by the first dividing plate 3a located between the raw material inlet 20 and the raw material outlet 22. The hydrodesulfurization passage 21 may not be divided and may be used as one passage.

The above embodiments may be combined with each other as long as those embodiments do not conflict with each other.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Industrial Applicability

The hydrogen generator of the present invention is useful as a hydrogen generator which reduces the mounting amount of hydrodesulfurization catalyst while maintaining its small size and high efficiency.

### Reference Signs List

- 1: hydrogen generator
- 3: hydro-desulfurizer
- 6: reforming catalyst layer (reformer)
- 13: burner (combustor)
- 19: cooler
- 21: hydrodesulfurization passage
- 24: cooling passage
- 23: air inlet (inlet of cooling passage)
- 25: air outlet

## Claims

1. A hydrogen generator comprising:
a reformer configured to generate a fuel gas, containing hydrogen as a major component, from a raw material gas;
a combustor configured to heat the reformer;
a hydro-desulfurizer configured to be heated by the reformer to remove a sulfur compound contained in the raw material gas by a hydrodesulfurization reaction; and
a cooler configured to cool down the hydro-desulfurizer, wherein:
the reformer includes a low temperature portion and a high temperature portion higher in temperature than the low temperature portion; and
the cooler is provided at a position corresponding to the high temperature portion of the reformer.

2. The hydrogen generator according to claim 1, wherein:
the hydro-desulfurizer includes therein a hydrodesulfurization passage through which the raw material gas flows;
the cooler includes a cooling passage; and
an inlet of the cooling passage is provided downstream of a middle point of the hydrodesulfurization passage.
